# EUROPEAN PATENT SPECIFICATION

(11) **EP 1 348 751 B1**
(45) Date of publication and mention of the grant of the patent: **24.01.2007**
(21) Application number: 03003750.1
(22) Date of filing: 19.02.2003
(51) Int. Cl.: C09K 8/04

(54) **Aqueous-based oil well drilling fluids containing high amylose starch polymers**
Wasser- basierte Bohrflüssigkeiten enthaltend Stärke mit hohem Amylosegehalt
Fluides de forage à base d'eau comprenant un amidon à forte teneur en amylose

(30) Priority: 28.03.2002 US 107119
(43) Date of publication of application: 01.10.2003
(73) Proprietor: Elementis Specialties, Inc., Hightstown, New Jersey 08520 (US)
(72) Inventor: Dino, David, Cranbury, NJ 08512 (US)
(74) Representative: Metten, Karl-Heinz

(56) References cited:
- EP-A- 0 366 898
- EP-A- 0 852 235
- EP-A- 1 186 645
- US-A- 5 882 713
- WHISTLER (ED) R L: "Industrial Gums" , INDUSTRIAL GUMS. POLYSACCHARIDES AND THEIR DERIVATIVES, XX, XX, PAGE(S) 554-557 XP002161137 * page 547 - page 548 *

## Description

### FIELD OF THE INVENTION

The invention relates to aqueous fluids used for drilling of oil, gas and geothermal wells in earth formations, and to additives for use in such fluids. More particularly, the invention relates to an aqueous-based drilling fluid containing specific types of starch. The starches are used to improve various qualities of such fluids, most specifically to control filtrate losses, while having a minimum impact on viscosity.

Most specifically, this invention relates to high amylose content starches used in well drilling fluids and to well drilling fluids produced therefrom. It has been surprisingly discovered that such starches provide filtrate loss control properties to drill fluids equal to or better than traditional starches but do not present the unwanted rheological increases to the fluids that such traditional starches cause.

### BACKGROUND OF THE INVENTION

Many inventions relate to drilling fluids and their additives. Drilling fluids technology is the application of scientific knowledge, engineering principles and the knowledge of chemistry to a specific industrial development. Drilling fluids technology therefore involves the sciences of geology, chemistry, and physics, and the skill of engineering. Its goal is the utilization of materials both old and new to attain at low cost, if possible, the desired objective of each excavation to lead to the discovery of oil or gas for both the benefit of private enterprise and the national good.

Drilling fluids technology aims not alone at the design and maintenance of an "ideal" drilling fluid, but at the achievement of a "real" end product-the successful completion of each bore hole with minimum overall expenditure and the production of a true energy resource in quantity.

Drilling fluids technology has developed as a significant economic contribution to the production of oil and gas in the United States and one of the most scientifically advanced of almost all American industries. Both the introduction of new products for drilling fluids and the development of better practices in their application have come about because there were problems to be solved. Such problems as how to reduce waste of natural resources; and how to lower costs through materials savings have led to the recognition of the drilling fluid and most importantly, its additive ingredients, as a vital factor in the success of drilling operations.

Drilling fluids are classified on the basis of a principal component. These components are (1) water, (2) oil, and (3) invert oil/water.

When the principal constituent is a water or oil, the term mud is often applied to a suspension of solids in the liquid. Water muds are thus characterized. Water was the first drilling fluid to be used and still is the principal component of most drilling fluids. Consequently, water muds receive the most attention. This invention involves water-based, often called aqueous based drilling fluids.

Water-based fluids often contain a large number of dissolved substances. These include alkalies, salts, and surfactants; organic polymers in collodial solution; droplets of emulsified oil; and various insoluble substances (such as barite, clays including hectorite and bentonite, and cuttings) in suspension. The mud composition selected for use often depends on the dissolved substances in the most economically available makeup water, or on the soluble or dispersive materials in the formations to be drilled.

For background, rotary systems are generally used in drilling oil and gas wells. These systems depend upon rotation of a string of drill pipe to the bottom of which is attached a drill bit. The bit cuts into the formation causing the cuttings to accumulate as drilling continues. A drilling fluid is used which lubricates the drill bit and carries cuttings to the surface for removal. This allows the bit to continue functioning and the bottom hole to be clean and free of cuttings. The drilling fluid is also the source of pressure which is exerted against the formation. Even in other drilling systems, drilling fluids are still needed to remove bore hole cuttings and to otherwise perform functions related to drilling fluids.

Oil and gas producing formations are generally porous layers having varying degrees of permeability to the flow of fluids such as oil, water or gas. When drilling through such porous formations, it is essential to employ drilling fluids having characteristics such that excessive amounts of the drilling fluid do not penetrate the porous formation. Drilling fluids have a tendency to penetrate the formation because pressure in the bore hole is greater than the pressure opposing it which comes from the formation. Should excess penetration occur, there is loss of drilling fluid into the formation resulting in loss of pressure, inability to drill and remove cuttings and in the case of loss from brine muds, extra expense because of their cost. Mere filter cake formation on the wall of the bore hole does not adequately eliminate fluid loss - additives to perform this function have proved essential.

In drilling wells, the mud-like fluid is pumped into the hole to clean and cool the drill bit and to flush to the surface the rock cuttings that are torn loose by the drill bit. The drilling fluid must have certain physical characteristics. The most important of these is the viscosity and the water holding or retaining characteristics of the fluid.

### PRIOR ART

The use of starch in well drilling fluids is known. See for example U.S. Pat. Nos. 4,652,384 and 4,650,593 which describe the use of starches in well drilling fluids.

It is also well known that conventional starches tend to break down at elevated temperatures for extended periods of time. Conventional starches tends to break down or degrade at temperatures of 225° F or higher when subject to that temperature for longer than four hours. High temperatures for extended periods of time are often encountered in deeper wells during the drilling process. The breakdown of conventional starch results in an increase in the consumption of the conventional starch needed in the mud.

There therefore has been a need in the well drilling industry for a starch which can operate for extended periods of time at elevated temperatures and which does not substantially influence the rheological profile of a drilling fluid.

In U.S Pat. No. 4,652,384 a crosslinked starch, for well drilling fluids is disclosed. This starch is preferably cornstarch crosslinked with phosphorous oxychloride. One example of this reference uses phosphorous oxychloride crosslinked waxy corn starch. It is contended by this reference that the starch can function satisfactorily up to 32 hours at temperatures above 250° F.
According to Table I of this reference, however, substantial performance degradation occurs within 24 hours in an API Fluid Loss test utilizing a starch product prepared in accordance with the teachings of this reference at a 275° F test temperature. Additionally, these starches contribute to the viscosity build of a drilling fluid. There is no teaching of what the chemical composition of the starch is as to the ratio of amylose to amylopectin.

U.S. Pat. No. 4,422,947 describes a well drilling fluid containing a crosslinked potato starch together with other additives. The reference does not report high temperature duration of fluid loss properties of the fluid.

U.S. Pat. No. 4,123,366 describes a well drilling fluid made from sea water which includes both sodium carboxymethyl starch and sodium carboxymethyl cellulose as fluid loss additives.

In addition to starches, cellulosic or synthetic polymers have been used as fluid loss control additives in well drilling fluids. Exemplary references disclosing such polymers include U.S. Pat. No. 4,600,515, U.S. Pat. No. 4,652,623 and U.S. Pat. No. 4,988,450. While some such polymers may provide better high temperature characteristics than the starches and modified starches previously employed in well drilling fluids, they are generally more expensive. Consequently there is a need for starches which have improved duration of fluid loss control at high temperatures.

Many of the above mentioned examples reference a starch polymer or cellulosic or biopolymer that have a significant contribution to the viscosity build of a drilling fluid which is an undesirable property to most fluid manufacturers.

Additional information regarding drilling fluid compositions and the use of starches therein can be found in J. Bourchardt, "Chemicals Used in Oil-Field Operations," Chapter 2 of Oil Field Chemistry, pp 3-54, American Chemical Society (1989).

### SUMMARY OF THE INVENTION

The invention is of an aqueous drilling fluid according to claim 1 which contains a starch which provides effective fluid loss performance and preferably does not substantially contribute to the viscosity build when incorporated into well drilling fluids. Another preferred aspect of the invention is an improved starch-containing well drilling fluid in which the starch component is a modified starch as described herein which is especially useful where the drilling fluid encounters high temperature. A still further aspect of the invention is the use of said aqueous drilling fluid according to claim 8.

The starch of the invention is derived from a starch or blend of starches having an amylose content of at least 70% by weight.

In addition to drilling fluids, the starches of the invention are useful in other drilling fluid applications which utilize higher cost polymers to obtain higher temperature tolerances, especially applications which currently employ cellulosic polymers.

### DETAILED DESCRIPTION OF THE INVENTION

Well drilling fluids are also referred to as muds, drilling muds, drill fluids, drilling fluids, oil well fluids and oil well drilling fluids in the industry and these terms should be understood as interchangeable throughout this application. It will be understood that these terms refer to a fluid which is pumped into a well during the drilling operation. The well itself may be for gas, oil or any other purpose where a well drilling fluid is used. The drilling fluids of this invention are water or aqueous based fluids.

The assignee of the instant invention (formerly Rheox, Inc.; now by change of name registered in the State of Delaware, Elementis Specialties, Inc.), has been granted a number of U.S. Patents which describe in detail what drilling fluids are, what they do, their history, and their compositions - see U.S. Patent Nos. 5,710,108; 5,710,110; 6,159,906; 6,187,719 and 6,339,048. The teaching of these patents is incorporated by reference.

Starches are natural polymers. Depending on their source, all starches contain both amylose and amylopectin repeating groups in their polymer molecular structure; they differ in containing different percentages of amylopectin or amylose repeating groups, one to the other. Typical sources of starch are wheat, potato, rice, corn and roots. Most starches contain mainly amylopectin units, especially waxy corn starch, and have been historically preferred. Blends of starches have also been employed.

Generically, starches are manufactured using a natural plant as the starting material. Corn is believed to contain approximately 74% amylopectin and 26% amylose units. Certain types of waxy maize are believed to be almost totally amylopectin, being about 97-99% amylopectin, with only traces, if any, of amylose. Amylopectin is believed to be more stable in saturated salt environments because of its branched-chain structure and this fact may have lead researchers to consider it as the only useful starch in aqueous fluids. In fact U.S. Patent No. 5,851,959 shows modified starch polymers used in drilling fluids where the starch employed is taught to require an amylopectin content of at least 80% by weight. See also U.S. Patent No. 6,133,203 which uses high amylopectin waxy maize starches in drilling fluids.

Recent discoveries of somewhat unusual plants such as the wrinkled pea and several unexpected corn hybrids have identified a previously unknown family of very high amylose starches. Ohio State University has been developing break-through high amylose new starches largely for food purposes.

The starch, whether a single type or a blend, which is used in preparing the drilling fluids of this invention should have a content of amylose of at least 70%, i.e., it has a maximum amylopectin content of 30%. The process of the present invention comprises preparing fluids for drilling, completion and workover of well bores, drilling the borehole, circulating such fluids during the drilling of the borehole, and completing the preparation of the well bore.

Starches of this invention provide the drilling fluid with effective and efficient fluid loss control properties often equal to or better than the use of prior art starches. The starches used in the present invention however do not have much effect on the viscosity and rheological properties of the inventive drilling fluid. Most users prefer that a starch additive does not effect viscosity. Prior art starches substantially increase viscosity making the drilling fluid harder to pump and less efficient.

Amylopectin is believed to comprise the outer, almost insoluble portion of starch molecules. Amylopectin is a hexosan, a polymer of glucose, and is a branched molecule of many glucose units, with a molecular weight distribution of 40,000 to 100,000. Amylose, on the other hand, is the inner, relatively soluble portion of the starch polymer, and is also a hexosan, a polymer of glucose, and consists of long straight chains of glucose units, with a molecular weight ranging from 10,000 to 100,000, joined by a 1,4-glycosidic linkage.

The repeating units that make up starch are shown below: 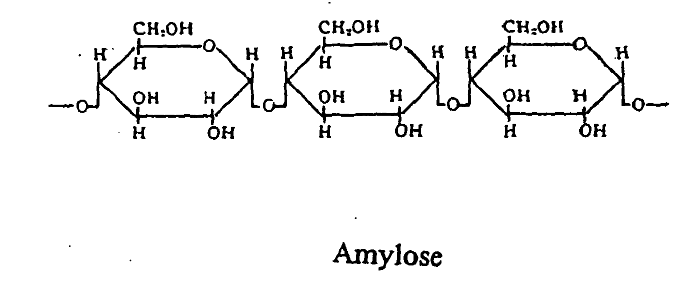 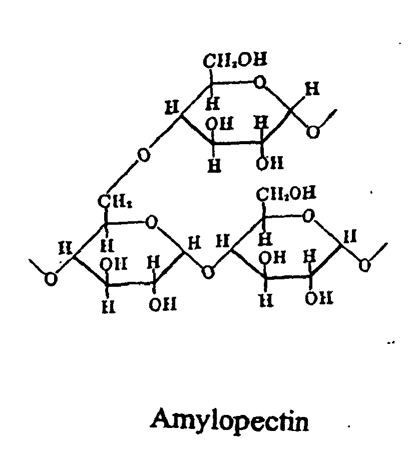 Molecular Weight ranging from 10,000 to 100,000
((Amylose)ₓ(Amylopectin)_{y})_{z}
x = 50-100%, y = 0 - 50%
z= Mol.Wt. ranging from 10,000 to 100,000

High amylose starches derived from naturally occurring or hybrid plants of the kind discussed above are most useful for this invention. Also useful are starches that are made synthetically from low amylose natural or hybrid plants by chemical processing techniques well known in the industry, to become high amylose modified starches. A variety of starch chemical manipulation and modifying techniques are known to produce these modified starches including processes that involve fractional precipitation to remove or reduce the amylopectin content and reduction processes that chemically "turns off" the amylopectin moieties but leave them in the polymer backbone.

The starches used in this invention can be crosslinked with a large number of crosslinkers including epichlorohydrin.

Epichlorohydrin crosslinked starch may optionally be reacted with propylene oxide to form a hydroxypropyl ether. The reaction of propylene oxide and starch is base catalyzed. Aqueous slurry reactions are generally catalyzed by 0.5 to 1% sodium hydroxide based on the dry weight of starch. Sodium sulfate or sodium chloride may be added to keep the starch from swelling during reaction with the propylene oxide. Reaction temperatures are generally in the range of about 38° to about 55° C. Propylene oxide levels generally range from about 1% to about 10% based on the dry weight of the starch. Propylene oxide-starch reactions take approximately 24 hours to complete under the conditions described and are about 60% efficient with respect to the propylene oxide. It is preferred that the epichlorohydrin crosslinked hydroxypropylated starch contain from about 0.5% to about 20% reacted propylene oxide based on the dry weight ("moisture free basis" or "MBS") of starch.

A large number of other methods of preparing crosslinked starches and starch ethers are well known in the art and can be employed in the manufacture of the starches of the invention.

The high amylose content starches of the invention may also be carboxymethylated. This is most suitably accomplished after crosslinking and, if employed, after the hydroxypropylation reaction. Carboxymethylation is accomplished by reacting the starch with chloroacetic acid or its sodium salt. Such reactions are well known. The degree of substitution (ds) in a carboxymethylated starch is at least 0.1, more desirably at least 0.3, and preferably at least 0.40 carboxymethyl groups per anhydroglucose unit in the starch polymer - carboxymethlated polymers with a ds of about 0.4 or higher are preferred because they are stable against fermentation; however, this degree of substitution is somewhat higher than can conventionally be achieved in a slurry reactor. Therefore for this type reaction the starch slurry is desirably transferred to a paste or "autoclave" reactor. Alternatively a higher water dilution or a solvent may be employed to allow for reaction to the high degree of substitution.

The starches useful in this invention can be drum-dried and milled to obtain a dry product. The milled dry product can then be incorporated into the oil well drilling fluid at the drill site if desired by the customer.

Particularly useful starches include commercially available starches of the type described for this invention include:
1) Collys E700 available from Roquette Freres, France
2) High amylose corn hydrids available from OPTA Food Ingredients & Illinois Specialty Farm Products
3) National Starch - Hylon product line
4) Perford - GELOSE product line

The starch can either be incorporated into the fluid at the manufacturer's location or at the drill site. It is understood that the aqueous drilling fluid to be made will likely contain a large number of other additives and chemicals well known in the field.

At the oil well drilling site, the starch of the present invention may be incorporated into the mud at any time, and is especially useful when the mud is prepared in a conventional manner with the addition of the starch of the present invention. In general, oil well mud is prepared by combining clay, brine and starch. Any type of brine or clay may be employed with the starch of the present invention. The proportions of the starch, clay and brine used in the mud are well known in the art, as are the methods used to combine them. It may also be possible to use the starch of the present invention with water and clay in the absence of brine or in a brine environment free of clay when making a well drilling fluid. It is also possible to employ the starch of the present invention with an initial wet drilling fluid which does not contain starch. In other words, an operator could start the drilling operation with a well fluid which does not contain starch and still employ the starch of the present invention in drilling that well.

In practice the amount of starch added to the mud will be different for different drilling operations and each operator will use a particular amount which he believes to be superior. In most applications, the amount of starch employed in the drilling fluid will not exceed about 4 or 6 pounds per barrel of the drilling fluid.

The well treating fluids of this invention can contain other conventional wellbore additives as desired in conventional amounts. Examples of such additives include oil, viscosifiers such as hydroxyethyl cellulose, carboxymethyl cellulose, xanthan and other gums, lignosulfonate salts such as calcium or chromium lignosulfonates, emulsifiers, weighting agents, corrosion inhibitors, calcium carbonate, magnesia, other starch derivatives, and the like, as is well known in the art. In particular, xanthan gum employed in the manner and relative proportions as described in U.S. Pat. No. 4,822,500 may be utilized in the drilling fluids of the invention.

Starch polymers of the present invention may be introduced into the hole in any number of ways known to those skilled in the art. Starch of the present invention may be combined with brine and clay and then added to mud made from conventional starch at the drill site prior to pumping it into the drill hole. Or, starch of the present invention may be added directly to a mud which contains conventional starch and the mud containing both starches can be pumped into the drill hole.
The invention can be used in any drilling fluid application where starches are currently used, including specifically such well treating applications as completions and workover operations. Such applications include completion fluids, workover fluids, lost circulation pills, kill fluids, drill in fluids to drill into productive formations, gravel packing fluids and fracturing fluids.

Further, many other drilling fluid applications which utilize higher cost polymers because of the low temperature tolerance of starches can be readily adapted to employ the high amylose content starches of the invention, especially such applications which currently employ cellulosic polymers.

The invention is illustrated by the following non-limiting examples. These examples show the surprising superiority of drilling fluids contain high anylose starches over prior art fluids containing low amylose starches.

### EXAMPLES

Starches as indicated below were provided and formulated into model drilling fluids which were tested for fluid loss and rheological properties.

All fluids were prepared and tested according to standard API mud preparation guidelines using standard malt cups and a 5 spindle Hamilton Beach multimixer. The prepared fluids were placed in 316 stainless steel heat age cells. The cells were placed in a roller oven set at the desired temperature and hot rolled for the desired time. The cells were taken out and quenched in a sink filled with cold water. API test methods were then conducted, recording the mls of fluid lost. The fluids were then replaced in the heat age cells and hot rolled for another cycle . The process was continued until degradation of the starch occurred. Rheological measurements were taken initially and after each hot roll cycle using a Fann model 35 Rheometer. Measurements were taken as per API RP 13B proceedures.

### Example A

### Base Mud Formulation

15 lbs/bbl bentonite
6.0 lbs/bbl polyacrylate dispersant
5.0 % sodium chloride
barite to 14.0 ppg
pH - 7.5 to 8.5
4.0 lbs/bbl starch

**Table 1**

| | High Amylopectin Starch | High Amylose Content Starch | No Starch |
|---|---|---|---|
| HTHP filtrate, cc (300° F, 500 psi) | 38 | 41 | 120 |
| 6 RPM Dial Reading | 136 | 57 | 51 |

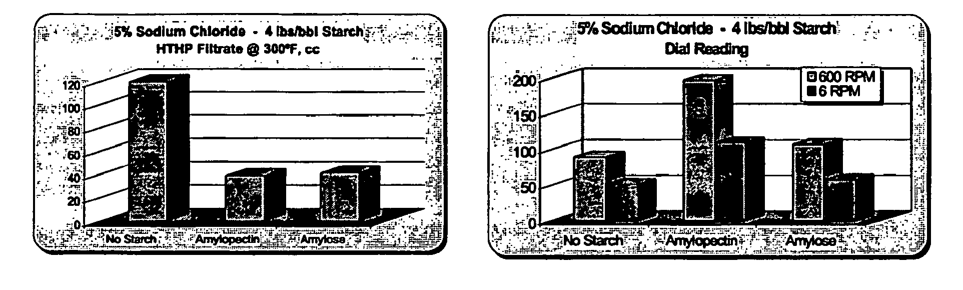

### Example B

### Base Mud Formulation

15 lbs/bbl bentonite
6.0 lbs/bbl polyacrylate dispersant
barite to 14.0 ppg
pH - 7.5 to 8.5
X lbs/bbl high amylose content starch
Hot rolled 16 hrs at 300° F

**Table 2**

| Starch Concentration, lbs/bbl | 0 | 2 | 4 | 8 |
|---|---|---|---|---|
| HTHP filtrate, cc | 35 | 20 | 17 | 13 |
| (300° F, 500 psi) | | | | |

### Example C

### Base Mud Formulation

12.5 lbs/bbl bentonite
1.0 lbs/bbl polyacrylate dispersant
barite to 14.0 ppg
50 lbs/bbl Rev Dust
pH - 7.5 to 8.5
X lbs/bbl starch
Hot rolled 16 hrs at 250° F

**Table 3**

| Starch Concentration, lbs/bbl | 0 | 2 | 4 | 8 |
|---|---|---|---|---|
| High Amylose Starch | | | | |
| HTHP filtrate, cc | 60 | 34 | 31 | 17 |
| (300° F, 500 psi) | | | | |
| High Amylose Starch | 3 | 6 | 9 | 19 |
| 6 RPM Dial Reading | | | | |
| High Amylopectin Starch | | | | |
| HTHP filtrate, cc | 60 | 29 | 20 | 12 |
| (300° F, 500 psi) | | | | |
| High Amylopectin Starch | 3 | 24 | 55 | 107 |
| 6 RPM Dial Reading | | | | |

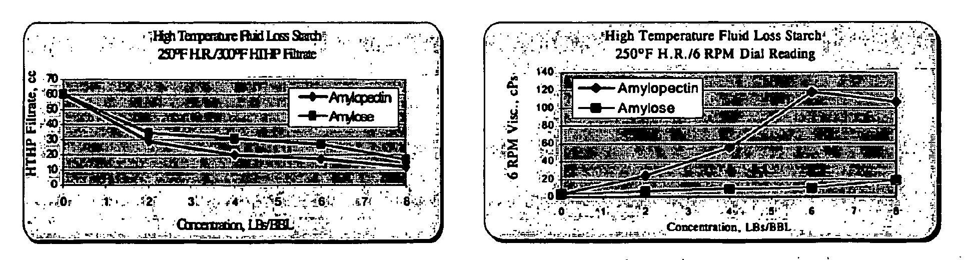

### Example D

### Base Mud Formulation

12.5 lbs/bbl bentonite
1.0 lbs/bbl polyacrylate dispersant
barite to 14.0 ppg
50 lbs/bbl Rev Dust
pH - 7.5 to 8.5
4 lbs/bbl starch
Hot rolled 16 hrs at 200° F

**Table 4**

| | High Amylopectin Content Starch | | | High Amylose Content Starch | No Starch |
|---|---|---|---|---|---|
| | Starch A | Starch B | Starch C | | |
| HTHP filtrate, cc | 18 | 18 | 20 | 21 | 45 |
| (300° F, 500 psi) | | | | | |
| 6 RPM Dial Reading | 127 | 115 | 36 | 3 | 2 |
| 600 RPM Dial reading | >330 | >330 | 280 | 118 | 77 |

### Example E

### Base Mud Formulation

12.5 lbs/bbl bentonite
1.0 lbs/bbl polyacrylate dispersant
barite to 14.0 ppg
50 lbs/bbl Rev Dust
pH - 7.5 to 8.5
4 lbs/bbl starch
Hot rolled 16 hrs at 150° F

**Table 5**

| | High Amylopectin Content Starch | | | High Amylose Content Starch | | | No Starch |
|---|---|---|---|---|---|---|---|
| % Amylopectin | 61% | 79% | ~100% | | | | |
| % Amylose | | | | 50% | 70% | 80% | |
| 6 RPM Dial Reading | 18 | 19 | 40 | 4 | 4 | 3 | 2 |
| 600 RPM Dial Reading | 177 | 200 | 326 | 114 | 94 | 89 | 77 |

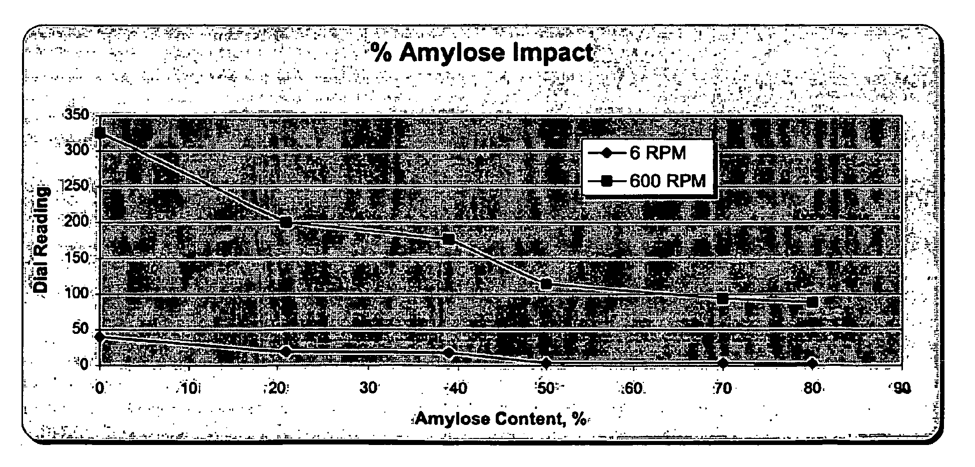

### Discussion of Fluid Loss/Rheology results highlighting the improvements of this invention:

### System A (salt)

Results from a model well drilling fluid incorporating 15 lb/bbl of bentonite and 5% sodium chloride is shown for Example A. Samples were prepared and tested for fluid loss and rheological properties after hot rolling at 150° F. according to API Specification. Test results are reported in Table 1.

The results depicted in Table 1 show that the starches of the invention provide remarkably lower viscosity build as well as comparable filtrate reduction in the presence of salt (sodium chloride) as compared to prior art (starches of low amylose content).

### System B (temperature)

Results from a model well drilling fluid incorporating 15 lbs/bbl of bentonite is shown for Example B. Samples were prepared and tested for fluid loss and rheological properties after hot rolling at 300° F. according to API Specification. Test results are reported in Table 2.

The results depicted in Table 2 show that the starches of the invention provide efficient filtrate reduction after heat aging at 300° F. for sixteen hours.

### System C (solids)

Results from a model well drilling fluid incorporating 12.5 lbs/bbl of bentonite and 50 lbs/bbl of Rev Dust (to simulate drill solids) is shown for Example C. Samples were prepared and tested for fluid loss and rheological properties after hot rolling at 250° F. according to API Specification. Test results are reported in Table 3.

The results depicted in Table 3 show that the starches of the invention provide remarkably lower viscosity build as well as comparable filtrate reduction in the presence of high solids (Rev Dust) as compared to prior art (starches of low amylose content).

### System D (prior art)

Results from a model well drilling fluid incorporating 12.5 lbs/bbl of bentonite and 50 lbs/bbl of Rev Dust (to simulate drill solids) is shown for Example D. Samples were prepared and tested for fluid loss and rheological properties after hot rolling at 200° F. according to API Specification. Test results are reported in Table 4.

The results depicted in Table 4 show that the starches of the invention provide remarkably lower viscosity build as well as comparable filtrate reduction in the presence of high solids (Rev Dust) as compared to 3 samples of prior art (starches of low amylose content).

### System E (amylose content)

Results from a model well drilling fluid incorporating 12.5 lbs/bbl of bentonite and 50 lbs/bbl of Rev Dust (to simulate drill solids) is shown for Example E. Samples were prepared and tested for rheological properties after hot rolling at 150° F. according to API Specification. Test results are reported in Table 5.

The results depicted in Table 5 (and graph) show that the starches with an amylose content of 50% and above result in an unexpected and much reduced rheological profile as compared to starches containing an amylose content of below 50% (amylopectin content above 50%).

The starch polymers, formulations and test results described above are merely illustrative of the invention and those skilled in the art will recognize that many other variations may be employed within the teachings provided herein. Such variations are considered to be encompassed within the scope of the invention as set forth in the following claims.

## Claims

1. An aqueous drilling fluid for drilling oil and gas well comprising water, starch and at least one of brine and clay wherein the starch is a high amylose content starch polymer having a content of amylose of at least 70% by weight.

2. The fluid of claim 1 further comprising a biopolymer such as xanthan gum.

3. The fluid of claim 1 further comprising at least one of hydroxyethyl cellulose, carboxymethyl cellulose, a lignosulfonate salt, an emulsifier, a weighting agent, a corrosion inhibitor, calcium carbonate, sized calcium carbonate, magnesia, or another starch derivative different from the high amylose content starch polymer.

4. The fluid of claim 1 wherein the starch polymer has been derived from a starch comprised of less than 30% amylopectin and is selected from the group consisting of Collys E700 and high amylose corn hybrids.

5. The fluid of claim 1 wherein said starch polymer is a modified starch polymer wherein said modification is obtained of a process selected from the group consisting of carboxymethylation and hydroxypropylation.

6. The fluid of claim 1 wherein said starch polymer is a modified starch polymer and is carboxymethylated.

7. The fluid of claim 1 wherein said starch polymer is a crosslinked starch polymer.

8. Use of an aqueous drilling fluid according to one of claims 1 to 7 for drilling of oil, gas and geothermal wells in earth formations.

9. Well drilling process comprising the step of providing an aqueous drilling fluid comprising a mixture of brine, clay and a fluid loss polymer to a bore hole, wherein at least a portion of the fluid loss polymer is a high amylose content starch polymer having a content of amylose of at least 70% by weight.

## Patentansprüche

1. Ein wässriges Bohrfluid für das Bohren von Öl- und Gasbohrlöchern, umfassend Wasser, Stärke und Sole oder/und Ton, wobei die Stärke ein Stärkepolymer mit hohem Amylosegehalt ist, dessen Amylosegehalt mindestens 70 Gew.-% beträgt.

2. Das Fluid nach Anspruch 1, weiterhin umfassend ein Biopolymer wie Xanthangummi.

3. Das Fluid nach Anspruch 1, weiterhin umfassend zumindest eines der folgenden: Hydroxyethylcellulose, Carboxymethylcellulose, ein Ligninsulfonat-Salz, einen Emulgator, ein Beschwerungsmittel, einen Korrosionsinhibitor, Calciumcarbonat, Calciumcarbonat mit bestimmter Korngröße, Magnesia oder ein weiteres Stärkederivat, das sich von dem Stärkepolymer mit hohem Amylosegehalt unterscheidet.

4. Das Fluid nach Anspruch 1, wobei das Stärkepolymer aus einer Stärke erhalten wurde, die zu weniger als 30 % Amylopektin aufweist und ausgewählt ist aus der Gruppe bestehend aus Colys E700 und Maishybriden [corn hybrids] mit hohem Amylosegehalt.

5. Das Fluid nach Anspruch 1, wobei das Stärkepolymer ein modifiziertes Stärkepolymer ist, wobei die Modifizierung durch ein Verfahren erhalten wird, ausgewählt aus der Gruppe bestehend aus Carboxymethylierung und Hydroxypropylierung.

6. Das Fluid nach Anspruch 1, wobei das Stärkepolymer ein modifiziertes Stärkepolymer ist und carboxymethyliert ist.

7. Das Fluid nach Anspruch 1, wobei das Stärkepolymer ein vernetztes Stärkepolymer ist.

8. Verwendung eines wässrigen Bohrfluids nach einem der Ansprüche 1 bis 7 zum Bohren von Öl-, Gas- und geothermischen Bohrlöchern in Erdformationen.

9. Bohrloch-Bohrverfahren, umfassend den Schritt der Zuführung eines wässrigen Bohrfluids, umfassend ein Gemisch aus Sole, Ton und einem Fluidschwund-Polymer zu einem Bohrloch, wobei zumindest ein Teil des Fluidschwund-Polymers ein Stärkepolymer mit hohem Amylosegehalt ist, dessen Amylosegehalt mindestens 70 Gew.-% beträgt.

## Revendications

1. Fluide de forage aqueux pour le forage d'un puits de pétrole et de gaz comprenant de l'eau, de l'amidon et au moins un de la saumure et l'argile dans lequel l'amidon est un polymère d'amidon à haute teneur en amylose ayant une teneur en amylose d'au moins 70% en poids.

2. Fluide selon la revendication 1 comprenant en outre un biopolymère tel que la gomme xanthane.

3. Fluide selon la revendication 1 comprenant en outre au moins un de l'hydroxyéthylcellulose, la carboxyméthylcellulose, un sel de lignosulfonate, un émulsifiant, un alourdissant, un inhibiteur de corrosion, le carbonate de calcium, le carbonate de calcium calibré, l'oxyde de magnésium ou un autre dérivé d'amidon différent du polymère d'amidon à haute teneur en amylose.

4. Fluide selon la revendication 1, dans lequel le polymère d'amidon est dérivé d'un amidon constitué de moins de 30% d'amylopectine et est choisi dans le groupe constitué par Collys E700 et les hybrides de maïs à haute teneur en amylose.

5. Fluide selon la revendication 1, dans lequel ledit polymère d'amidon est un polymère d'amidon modifié dans lequel ladite modification est obtenue par un procédé choisi dans le groupe constitué par la carboxyméthylation et l'hydroxypropylation.

6. Fluide selon la revendication 1, dans lequel ledit polymère d'amidon est un polymère d'amidon modifié et est carboxyméthylé.

7. Fluide selon la revendication 1, dans lequel ledit polymère d'amidon est un polymère d'amidon réticulé.

8. Utilisation d'un fluide de forage aqueux selon l'une des revendications 1 à 7 pour le forage de puits de pétrole, de gaz et géothermiques dans des formations géologiques.

9. Procédé de forage de puits comprenant l'étape consistant à introduire un fluide de forage aqueux comprenant un mélange de saumure, d'argile et un polymère contre les pertes de filtrat dans un trou de forage, dans lequel au moins une partie du polymère contre les pertes de filtrat est un polymère d'amidon à haute teneur en amylose ayant une teneur en amylose d'au moins 70% en poids.
